# EUROPÄISCHE PATENTANMELDUNG

(11) **EP 1 484 132 A2**
(43) Veröffentlichungstag der Anmeldung: **08.12.2004**
(21) Anmeldenummer: 04012729.2
(22) Anmeldetag: 28.05.2004
(51) Int. Cl.: B23Q 7/14, B23Q 7/04

(54) **Beladesystem für eine Bearbeitungsstation**

(30) Priorität: 06.06.2003 DE 10325878
(71) Anmelder: Grob-Werke Burkhart Grob e.K., 87719 Mindelheim (DE)
(72) Erfinder: Grob, Burkhart, 86825 Bad Wörishofen (DE); Lutz, Heinrich, 87742 Dirlewang (DE)
(74) Vertreter: Pfister, Stefan Helmut Ulrich

(57) **Zusammenfassung**

Die Erfindung betrifft unter anderem ein Beladesystem für eine Bearbeitungsstation, welche Werkstücke bearbeitet, wobei das Beladesystem eine Beladeeinrichtung aufweist, die mit einer das Werkstück tragenden Palette zusammenwirkt. An der Beladeeinrichtung sind mehrere Schwenkhebel antreibbar angeordnet. Die Palette wird durch die Schwenkhebel an der Greifeinrichtung gehalten.

## Beschreibung

Die Erfindung betrifft ein Beladesystem für eine Bearbeitungsstation, welche Werkstücke bearbeitet, wobei das Beladesystem eine Greifeinrichtung aufweist, die mit einem Gut, mit dem Werkstück unmittelbar oder einer das Werkstück tragenden Palette zusammenwirkt.

Die Erfindung betrifft gleichwohl auch eine Greifeinrichtung, welche zum Ergreifen von Gütern wie Werkstücken oder werkstücktragenden Paletten dient. Die Erfindung umfaßt des Weiteren ein Gut, wie zum Beispiel eine ein Werkstück tragende Palette oder das Werkstück selber, die insbesondere für das Zusammenwirken mit einer Greifeinrichtung, zum Beispiel in dem vorgenannten Beladesystem, dient.

In der automatischen Fertigung ist das Werkstück in vielfacher Weise zu handhaben. Es muß zwischen den einzelnen Bearbeitungsstationen transportiert werden, es muß gegebenenfalls gewendet, gedreht oder in seiner Lage verändert werden. Oftmals ist es günstig, das Werkstück entlang einer Transportbahn zu bewegen und die Bearbeitungsstationen rechtwinklig hierzu anzuordnen und spezielle Beladeeinrichtungen vorzusehen, die für einen Transport des Werkstückes von der Transportbahn in die Bearbeitungsstation und wieder zurück sorgt.

Hierfür sind insbesondere Roboter bekannt, die mit sehr aufwendigen Greifarmen oder Spannvorrichtungen die Palette ergreifen und von der Transportbahn abheben, um sie zu der Bearbeitungsstation zu bringen.

Der Einsatz von solchen Robotern für diese Tätigkeit ist aber sehr aufwendig.

Aus dem Stand der Technik ist aus der deutschen Offenlegungsschrift 100 53 804 ein Werkstückwechsler bekannt, bei dem L-artige Greifer von außen ein zu transportierendes Gut ergreifen. Das Gut weist am Rand entsprechende Nuten auf, in die die Greifer eingreifen.

Nachteilig bei diesem Vorschlag ist, daß das Werkstück nur entlang einer Linearachse mit dem vorgeschlagenen Werkstückwechsler bewegt werden kann.

Die Erfindung hat es sich zur Aufgabe gemacht eine Anordnung zu finden, um das Aufnehmen beziehungsweise das Ablegen von Gütern, insbesondere für das Beladen von Bearbeitungsstationen, flexibler zu gestalten.

Gelöst wird diese Aufgabe durch eine Greifeinrichtung, welche zum Ergreifen von Gütern wie Werkstücken oder werkstücktragende Paletten dient und die Greifeinrichtung einen Greifantrieb aufweist, welcher Schwenkhebel derart betätigt, daß diese in einer ersten Stellung in Greiftaschen oder Hinterschneidungen des Gutes haltend eingreifen und diese in einer zweiten Stellung aus diesen herausgeschwenkt sind und das Gut derart freigibt, daß Gut und Greifeinrichtung in einer Ebene relativ zueinander bewegbar sind.

Bei der Lösung nach dem Stand der Technik ist eine solche Beweglichkeit nicht möglich. Die winkligen Greifer werden einfach gegenüber dem Werkstück zurückgezogen und geben dieses frei, verbleiben aber in einer Position neben dem Werkstück, wodurch nur eine Relativbewegung zwischen dem Werkstück (dem Gut) und dem Greifer entlang einer Linearachse möglich ist. Gemäß der Erfindung werden aber die störenden Elemente so weit zurückbewegt, daß Gut und Greifeinrichtung in einer Ebene relativ zueinander bewegbar sind. Die Flexibilität einer solchen Anordnung steigt erheblich. Die erfindungsgemäße Greifeinrichtung wird zum Beispiel dafür eingesetzt, Güter, zum Beispiel zu bearbeitende Werkstücke (mit oder ohne Palette), von einer Transportbahn (z.B. Ab- oder Anförderbahn) abzuheben oder abzulegen. Die Beweglichkeit der Greifeinrichtung ist dabei geradförmig und oftmals winklig, insbesondere rechtwinklig zur Förderrichtung der Transportbahn orientiert. Nach den Lösungen des Standes der Technik mußte zunächst gewartet werden, bis das zu transportierende Gut in Achsrichtung der Bewegungsrichtung des Greifers genau positioniert ist. Der ganze Bearbeitungsprozeß mußte hierauf Rücksicht nehmen. Nach der Erfindung kommt es auf diesen Zeitpunkt nicht mehr an. Die Greifeinrichtung kann vor, während oder nach dem Einfördern des zu transportierenden Gutes in die Übernahmestelle gelangen oder an dieser sein, wodurch sich der Bearbeitungsprozeß erheblich beschleunigt. Die Anordnung wird dadurch auch erheblich flexibler. Ein wesentlicher Vorteil liegt aber insbesondere in der erhöhten Geschwindigkeit für das Wechseln von Gütern, da die Greifeinrichtung schnell wieder verfügbar ist und so die beim Werkstückwechsel auftretenden Standzeiten der Bearbeitungsstation reduziert werden. Hieraus resultiert letztendlich eine höhere Effizienz der mit der Erfindung ausgestatteten Bearbeitungsstation beziehungsweise einer Bearbeitungslinie mit solchen Bearbeitungsstationen.

Der vorgenannte Vorteil tritt dabei nicht nur dann auf, wenn das Werkstück von dem Anförderband abgeholt oder abgelegt wird, er kann in gleicher Weise auch in der Bearbeitungsstation ausgenützt werden, wenn nämlich das Gut in eine entsprechende Spanneinrichtung der Bearbeitungsstation übergeben ist. Auch hier treten in gleicher Weise die Vorteile der Erfindung zutage.

Die erfindungsgemäße Aufgabe wird des Weiteren durch ein Gut, wie zum Beispiel eine ein Werkstück tragende Palette oder ein Werkstück gelöst, wobei das Gut zumindest Greiftaschen oder Hinterschneidungen aufweist, die mit den Schwenkhebeln zusammenwirken und sich die Greiftaschen beziehungsweise Hinterschneidungen an einer Seite des Gutes befinden.

Nach der Erfindung ist es möglich, daß entweder das Werkstück selber dementsprechende Ausgestaltungen zum Zusammenwirken mit der Greifeinrichtung aufweist oder aber das Werkstück auf einer Palette aufmontiert ist und die Palette ihrerseits eine entsprechende Ausgestaltung aufweist. Der gewählte Begriff Gut umfaßt daher eine Vielzahl von Möglichkeiten (z.B. Palette, Werkstück usw.), wobei das Gut auch mehrteilig ausgebildet sein kann.

Die Konzentration aller Greiftaschen und Hinterschneidungen auf einer Seite des Gutes erleichtern es, daß die Schwenkhebel in einfacher Weise auch derart wegbewegbar sind, so daß Gut und Greifeinrichtung in einer Ebene relativ zueinander bewegbar sind. Ein positiver Nebeneffekt dabei ist, daß die Anordnung sehr platzsparend ist. Da der Bearbeitungsraum innerhalb der Bearbeitungsstation verhältnismäßig kostspielig ist und eher dafür genützt werden soll, große Werkstücke zu bearbeiten als den Raum mit nicht zu bearbeitenden Paletten oder Greifeinrichtungen zu belegen, wird durch den erfindungsgemäßen Vorschlag für das Gut die Flexibilität einer solchen Anordnung erheblich erhöht, da eine größere Bearbeitungsmöglichkeit erreicht wird.

Neben dieser platzsparenden Anordnung erlaubt der erfindungsgemäße Vorschlag eine Ausgestaltung des Gutes aber auch eine hohe Zugänglichkeit für Bearbeitungswerkzeuge an das Gut. Bei den Vorschlägen nach dem Stand der Technik wird das Gut zumindest zweiseitig ergriffen, wobei zumindest diese Bereiche, neben der zwischenliegenden Anlagefläche für eine Bearbeitung nicht zur Verfügung stehen. Bei den Lösungen nach dem Stand der Technik ist für eine mehrseitige Bearbeitung unter Umständen ein Umspannen notwendig, was entsprechend zeitaufwendig ist. Die Erfindung vermeidet dies, da von den theoretisch sechs Seiten fünf Seiten für die Bearbeitung zur Verfügung stehen und nur an einer Seite die notwendigen Elemente der Greifeinrichtung in entsprechend vorgesehene Greiftaschen oder Hinterschneidungen eingreifen. Auch dies trägt letztendlich zur Effizienzsteigerung bei, da dadurch eine effektivere Bearbeitung, ohne Stillstandzeiten der Maschine wegen eines Umspannens des Werkstückes resultiert.

Des Weiteren wird die erfindungsgemäße Aufgabe auch durch ein Beladesystem für eine Bearbeitungsstation gelöst, wobei die Bearbeitungsstation Werkstücke bearbeitet und das Beladesystem eine Greifeinrichtung aufweist, die mit einem Gut, einem Werkstück unmittelbar oder einer das Werkstück tragenden Palette zusammenwirkt. Dabei ist das Beladesystem dadurch gekennzeichnet, daß die Greifeinrichtung derart bezüglich der Palette beziehungsweise des Gutes positionierbar ist, daß die Schwenkhebel in Hinterschneidungen in der der Greifeinrichtung zugewandten Fläche der Palette beziehungsweise des Gutes einzugreifen vermögen.

Durch die erfindungsgemäße Ausgestaltung des Beladesystems wird die Flexibilität der Anordnung dahingehend erhöht, daß das Gut an fast allen Seiten bearbeitbar ist. Die ganze Anordnung ist daher äußerst platzsparend ausgeführt, wodurch sich der effiziente Bearbeitungsraum in der Bearbeitungsstation entsprechend erhöht. Gerade der Einsatz der ebenfalls vorgeschlagenen, erfindungsgemäßen Greifeinrichtung und des erfindungsgemäßen Gutes in dem erfindungsgemäßen Beladesystem erlaubt eine noch höhere Flexibilität, da damit das Gut flexibel transportierbar und daher auch schnell in die Bearbeitungsstation bringbar und wieder entfernbar (nach einer entsprechenden Bearbeitung) ist.

Zur Lösung dieser Aufgabe schlägt die Erfindung auch vor, daß das Beladesystem, welches aus der Greifeinrichtung einerseits und der zu transportierenden Palette andererseits besteht, wie nachfolgend geschildert, aufeinander abgestimmt und verbessert wird. Dabei erstreckt sich die Erfindung nicht nur auf das Beladesystem in der Gesamtheit, sondern auch auf die einzelnen Bestandteile, die zu der Erfindung gehören.

Zunächst weist die Erfindung eine Greifeinrichtung auf, welche zum Ergreifen der werkstücktragenden Paletten dient. Diese besitzt einen Greifantrieb, welcher Schwenkhebel derart betätigt, daß diese in einer ersten Stellung in Greiftaschen oder Hinterschneidungen der Palette haltend eingreifen und diese in einer zweiten Stellung aus diesen herausgeschwenkt ist und die Palette freigibt. Der Einsatz von Schwenkhebeln, die um eine Achse drehbar gelagert sind, bietet erhebliche Vorteile, da man mit einem Rotationsantrieb gegebenenfalls zwei orthogonale Linearbewegungen einspart. Es reicht aus, die Greifeinrichtung über der Palette zu positionieren und die Schwenkhebel werden durch die Schwenkbewegung so weit abgesenkt, daß sie mit der Palette zusammenwirken können, fahren dann in die Hinterschneidung ein, das heißt, sie schwenken weiter, um sicher die Palette zu ergreifen. Eine solche Ausgestaltung ist denkbar einfach wie zuverlässig.

In einer bevorzugten Ausgestaltung der Erfindung ist vorgesehen, daß die Ebene, in der Gut und Greifeinrichtung relativ zueinander bewegbar sind, rechtwinklig zu einer Verbindungslinie zwischen dem Gut und der Greifeinrichtung ist. Hierbei ist zum Beispiel vorgesehen, daß die Verbindungslinie auch gleichzeitig parallel mit einer Bewegungsachse ist, um zum Beispiel das Gut relativ zu der Greifeinrichtung zu bringen. Dies kann zum Beispiel eine Anheb- oder Absenkbewegung sein. Die Verbindungslinie kann aber auch von dieser Linearachse abweichend orientiert sein. Sie ist zum Beispiel auch definiert durch die Verbindungslinie der jeweiligen Schwerpunkte oder definiert durch eine oder beide Symmetrieachsen des Gutes oder der Greifeinrichtung.

In einer weiteren Variante der Erfindung wird vorgeschlagen, daß die Ebene parallel zu einer Kontaktfläche zwischen Gut und Greifeinrichtung ist. Soweit die Kontaktfläche tatsächlich eine ebene Fläche ist, ist die Ebene, in welcher das Gut und die Greifeinrichtung zueinander bewegbar sind, hierzu parallel. Bevorzugt wird dabei die Kontaktfläche rechtwinklig zur Relativbewegung von Gut und Greifeinrichtung sein, wenn nämlich die Greifeinrichtung und das Gut haltend zusammenwirken.

Günstigerweise ist die Anordnung so getroffen, daß das Gut und die Greifeinrichtung kollisionsfrei zueinander bewegbar sind. Gerade hierdurch wird erreicht, daß eine hohe Beweglichkeit und hohe Flexibilität der Erfindung resultiert.

Bevorzugterweise ist vorgesehen, daß der Abstand der Schwenkhebel geringer ist als die Außenabmessung des Gutes. Durch eine solche Ausgestaltung wird erreicht, daß die gesamte Anordnung möglichst platzsparend ist. Die Schwenkhebel greifen dann bevorzugt an einer Seite des Gutes an dieser an. Es resultieren neben einer platzsparenden Anordnung auch eine hohe Flexibilität bei der Bearbeitbarkeit des Gutes im Bearbeitungsraum, da keine störenden Konturen die Außenseite des Gutes verdecken. Auch das Umsetzen des Gutes von einer An- beziehungsweise Abförderbahn in die Greifeinrichtung erfolgt entsprechend platzsparend, da die Ausgestaltung des Greifers nicht die maximale Breite des Werkstückes und damit der An- und Abförderbahn begrenzt.

Eine weiterer Vorteil der Erfindung liegt darin, daß die Schwenkachse der Schwenkhebel parallel zur Ebene ist. Durch eine solche Ausgestaltung sind die geometrischen Verhältnisse und die konstruktiven Lösungen einfacher, wenngleich natürlich auch eine Lösung zur Erfindung gehört, bei welcher die Schwenkachse der Schwenkhebel zu dieser Ebene einen gewissen Winkel einschließen.

Bevorzugt wird vorgeschlagen, daß die Schwenkhebel von der gleichen Seite her mit den jeweiligen Greiftaschen und Hinterschneidungen des Gutes zusammenwirken. Auch hierdurch wird ein Beitrag für eine möglichst platzsparende Realisierung der erfindungsgemäßen Anordnung geleistet. Die Schwenkbewegung der Schwenkhebel ist dabei bevorzugt gegensinnig, zum Beispiel von innen nach außen oder von außen nach innen, um mit den entsprechend angeordneten Greiftaschen und Hinterschneidungen des Gutes zusammenzuwirken. Da die Schwenkhebel aber jeweils an einer Seite des Gutes angreifen bleiben, wie bereits mehrfach erwähnt, die übrigen Seiten für Bearbeitungen frei.

In einer weiteren Variante der Erfindung ist vorgesehen, daß der Abstand der Schwenkachsen der Schwenkhebel geringer ist als die Außenabmessungen des Gutes. In einer Variante der Erfindung ist es durchaus möglich, die Schwenkhebel so anzuordnen, daß der Abstand geringer ist als die Außenabmessungen des Gutes, aber die dazugehörigen Schwenkachsen außerhalb des Gutes liegen. Umgekehrt ist es möglich, den Abstand der Schwenkachsen geringer als die Außenabmessungen des Gutes zu wählen, wodurch natürlich eine platzsparende Bauweise entsprechend realisierbar ist. Aber auch hier ist die Variante möglich, daß, obwohl der Abstand der Schwenkachsen geringer ist als die Außenabmessungen des Gutes, der Schwenkhebelabstand größer ist als die Außenabmessung des Gutes. All diese Varianten zählen zur Erfindung.

Des Weiteren wird erfindungsgemäß vorgeschlagen, daß die Greifeinrichtung eine Anlageplatte aufweist und das Gut mit seiner äußeren Fläche in der ersten Stellung an der Anlageplatte anliegt. In der ersten Stellung der Schwenkhebel ist vorgesehen, daß diese in Greiftaschen oder Hinterschneidungen des Gutes haltend eingreifen. Durch diese Haltebewegung wird das Gut gegen die Greifeinrichtung bewegt, diese Bewegung wird durch eine Anlageplatte der Greifeinrichtung entsprechend begrenzt, an der die äußere Fläche des Gutes anliegt. Alternativ ist vorgesehen, daß die Anlageplatte auch die Kontaktfläche zwischen Gut und Greifeinrichtung die Definition der Ebene bildet. Der Vorteil dieser Ausgestaltung ist, daß die Schwenkhebel das Gut gegen einen festen Anschlag, der Anlageplatte, bewegen.

Alternativ ist es auch möglich, auf ein solches Zusammenwirken der Anlageplatte und der äußeren Fläche des Gutes zu verzichten und das Gut nur an den Schwenkhebeln gehalten insbesondere hängend, mit ein oder zwei Freiheitsgraden verbleibend, zu positionieren und so zu halten.

In einer bevorzugten Ausgestaltung der Erfindung wird vorgeschlagen, daß die Greifeinrichtung durch einen Laufwagen, insbesondere mit einem Laufwagenantrieb in einer Führung bewegbar ist. Im Zusammenhang mit dieser Erfindung wird hierzu auch von einer Beladeeinrichtung gesprochen, wobei die Beladeeinrichtung insbesondere für das Be- und Entladen von Bearbeitungsstationen mit auf Paletten montierten Werkstücken dient und die Beladeeinrichtung eine Führung aufweist, auf welcher ein Laufwagen bevorzugt durch einen Laufwagenantrieb bewegbar ist und der Laufwagen eine Greifeinrichtung trägt. Durch die Ausgestaltung mit einem Laufwagen ist es möglich, die Greifeinrichtung zwischen mehreren Orten sicher hin- und herbewegen zu lassen. Dabei ist vorgesehen, daß der Laufwagenantrieb in einer ersten Variante auf dem Laufwagen selber angeordnet ist oder aber der Laufwagenantrieb zum Beispiel durch einen Riemenantrieb oder einen Rollspindelantrieb und dergleichen geleistet wird, der nicht mit der Greifeinrichtung mitfährt.

Für die Anordnung des durch die Greifeinrichtung aufgenommenen Gutes sieht die Erfindung mehrere Varianten bezüglich der Positionierung zum Laufwagen vor. Da die Erfindung nicht auf eine hängende oder stehende Anordnung des Gutes bezüglich der Greifeinrichtung festgelegt ist, ist es gemäß der Erfindung möglich, daß sich die Greifeinrichtugn mit dem aufgenommenen Gut unter oder über dem Laufwagen befindet.

Ein wesentlicher Vorteil der Erfindung liegt aber insbesondere darin, daß die Greifeinrichtung insbesondere mit dem aufgenommenen Gut, über den Wagen vorkragt. Das bedeutet, daß das Gut nicht direkt unter oder über dem Laufwagen orientiert ist, sondern der Laufwagen einen Träger aufweist, an welchen sich die Greifeinrichtung horizontal gegenüber dem Laufwagen versetzt befindet und so ein Vorkragen des transportierten Gutes erreicht. Durch eine solche Ausgestaltung wird insbesondere das Beladen der Bearbeitungsmaschine erheblich erleichtert. Die Führung für den Laufwagen muß nicht in den Bearbeitungsraum hineingebaut werden, der kostbare Bearbeitungsraum bleibt hiervor frei.

In einer weiteren Variante der Erfindung wird vorgeschlagen, daß die Greifeinrichtung schmäler ist als das Gut beziehungsweise die Palette. Es wird eine sehr platzsparende Realisierung der Greifeinrichtung vorgeschlagen, deren Bauhöhe beziehungsweise auch Breite möglichst gering ist und insbesondere schmäler ist als die des Gutes respektive der Palette. Da die Höhe der Greifeinrichtung letztendlich die nutzbare Werkstückhöhe im Bearbeitungsraum beschränkt, wird durch eine sehr schlanke Ausgestaltung der Greifeinrichtung der Bearbeitungsraum optimal genützt. In diesem Zusammenhang beschränkt sich die Erfindung auch nicht darauf, daß das zu bearbeitende Werkstück grundsätzlich auf einer Palette zu montieren ist, da ja auch die Palette eine entsprechende Bauhöhe in Anspruch nimmt, für die der Bearbeitungsraum nicht ausgenützt werden kann. Daher ist mit der erfindungsgemäßen Greifeinrichtung allgemein ein Gut zu ergreifen, das sowohl ein auf einer Palette montiertes Werkstück wie auch das Werkstück unmittelbar sein kann. Natürlich wird auch angestrebt, daß die Palette möglichst schmal bauend, gleichwohl aber stabil und zuverlässig ist, um den kostbaren Bearbeitungsraum optimal auszunutzen.

Die Erfindung führt natürlich auch zu entsprechenden Anpassungen an der Palette. Diese besitzt zumindest Greiftaschen oder Hinterschneidungen, die in geeigneter Weise mit den Schwenkhebeln zusammenwirken, wobei sich diese an einer Seite des Gutes befinden. Auf die hieraus resultierenden Vorteile wurde eingangs bereits hingewiesen.

Hierzu gibt es eine Vielzahl verschiedener Varianten. Es ist zum Beispiel möglich, daß die Greiftaschen bzw. Hinterschneidungen durch Aussparungen der Palette gebildet sind. Die Palette, die zum Beispiel plattenähnlich ausgebildet ist, weist entsprechende Ausnehmungen punktuell auf.

Günstigerweise wird in einer weiteren erfindungsgemäßen Variante vorgesehen, daß sich die Greiftasche/Hinterschneidung an der der Greifeinrichtung zugewandten Gutseite befindet. Hieraus resultiert eine sehr platzsparende Anordnung.

Alternativ ist es aber auch möglich, daß die Palette zargenartig oder rahmenartig ausgebildet ist und der innenliegende Rand der Zarge bzw. des Rahmens zumindest abschnittsweise die Hinterschneidung bzw. Greiftasche bildet. Je nach Aufgabe kann eine solche Palette bereits ausreichend sein, eine oder mehrere Werkstücke zuverlässig aufzunehmen. Auf eine verhältnismäßig große und schwere Palette kommt es dabei nicht an. Die Erfindung erlaubt es aber, trotzdem auch mit solchen Paletten eingesetzt zu werden, da geschickterweise der Schwenkhebel auch entsprechende Ränder für eine Hinterschneidung oder eine Greiftasche auszunutzen versteht.

In einer weiteren vorteilhaften Ausgestaltung der Erfindung ist vorgesehen, daß die mit dem Schwenkhebel zusammenwirkenden Flächen der Hinterschneidungen beziehungsweise Greiftaschen des Gutes beziehungsweise der Palette parallel oder spitzwinklig zu einer äußeren, insbesondere der Greifeinrichtung zugewandten Fläche sind. Im Stand der Technik sind Anordnungen bekannt, bei welchen die mit dem Schwenkhebel zusammenwirkenden Flächen rechtwinklig zur Außenfläche sind, wodurch sich das seitliche Halten des Gutes durch den Schwenkhebel bedingt. Hieraus resultierten die verhältnismäßig platzaufwendigen Anordnungen und die reduzierte Bearbeitungsmöglichkeit. Entgegen wird durch den erfindungsgemäßen Vorschlag erreicht, daß eine sehr platzsparende Realisierung möglich ist, wobei eine spitzwinklige Anordnung, soweit sie nicht 90° erreicht dazu führt, daß durch das Einschwenken der Schwenkhebel in die Hinterschneidungen beziehungsweise Greiftaschen das Gut hierdurch etwas angehoben wird. Dadurch wird das Abnehmen des Gutes von der Transportbahn oder einer sonstigen Auflage erleichtert.

Vorteilhafterweise befinden sich die Greiftaschen bzw. Hinterschneidungen auf der dem Werkstück abgewandten Palettenseite bzw. sind von dort zugänglich. Daher stört der Greifmechanismus die freie Zugänglichkeit zum Werkstück nicht, die Bearbeitungsmöglichkeit des Werkstückes wird nicht beeinträchtigt. Die Erfindung erlaubt es aber auch grundsätzlich auf der gleichen Seite an der Palette angeordnet zu sein, wie das Werkstück.

Ein wesentlicher Vorteil der Erfindung wird dadurch erreicht, daß der mit dem Schwenkhebel zusammenwirkende Bereich der Hinterschneidung bzw. der Greiftasche schräg ist. Ein Zusammenwirken des Schwenkhebels, der sich auf einer Kreisbahn bewegt, mit der schrägen Hinterschneidung bzw. Greiftasche führt dazu, daß die zum Beispiel von mehreren Schwenkhebeln ergriffene Palette sich in der Greifeinrichtung selber justiert, da Hangabtriebskräfte auftreten. Gleichzeitig dient die Anordnung dazu, daß der Schwenkhebel bereits beim Einschwenken in die Palette an den schrägen Flächen diese etwas anhebt und von der Auflage abhebt.

Des Weiteren sieht die Erfindung vor, daß die Greiftaschen beziehungsweise Hinterschneidungen durch Aussparungen des Gutes gebildet sind. Hierzu können auch Nuten oder dergleichen zählen.

Des Weiteren umfaßt die Erfindung ein Beladesystem für eine Bearbeitungsstation, welche Werkstücke bearbeitet. Das Beladesystem umfaßt dabei eine Greifeinrichtung, welche mit einem Gut, einem Werkstück unmittelbar oder einer das Werkstück tragenden Palette zusammenwirkt. Günstigerweise wird gemäß dem erfindungsgemäßen Beladesystem auf eine Greifeinrichtung und/oder ein Gut gemäß der Erfindung zurückgegriffen. Hierauf ist die Erfindung aber nicht beschränkt. Vorteilhafterweise wird vorgeschlagen, die Greifeinrichtung derart bezüglich der Palette beziehungsweise des Gutes zu positionieren, daß die Schwenkhebel der Greifeinrichtung in Hinterschneidungen oder Greiftaschen in der der Greifeinrichtung zugewandten Fläche der Palette beziehungsweise des Gutes einzugreifen vermögen. Durch eine solche Ausgestaltung wird eine platzsparende Anordnung realisiert. Wird zum Beispiel auf die erfindungsgemäße Greifeinrichtung hierbei zurückgegriffen, so wird zusätzlich erreicht, daß auch eine Relativbewegung in einer Ebene zwischen Gut und Greifeinrichtung möglich ist, wodurch sich das Be- und Entladen der Greifeinrichtung erheblich beschleunigt.

Günstigerweise ist vorgesehen, daß das Gut an der Greifeinrichtung hängt, wobei die Erfindung hierauf nicht beschränkt ist. Das Gut kann auch stehend mit dem Beladesystem transportiert werden. Im ersteren Fall allerdings ist es von Vorteil, wenn die Schwenkhebel von oben das Gut beziehungsweise die Palette ergreifen und so halten. Da das Verladesystem insbesondere für das Ver- und Entsorgen von Bearbeitungsstationen mit entsprechenden Werkstücken dienen soll, erlaubt der hängende Transport auch ein hängendes Aufspannen des Gutes/des Werkstückes in der Bearbeitungsstation und die hängende Bearbeitung ermöglicht die Ausnutzung von Vorteilen bei der Spanabfuhr.

Des Weiteren umfaßt die Erfindung ein Verfahren für das Beladen einer Bearbeitungsstation mit einem Werkstück, wobei das Werkstück unmittelbar oder mittelbar durch eine Palette von einer Greifeinrichtung gehalten ist, wobei die Greifeinrichtung Schwenkhebel aufweist, die die Palette beziehungsweise das Werkstück (nachfolgend in diesem Zusammenhang als das Gut beschrieben) halten und das Gut durch die Greifeinrichtung in eine Spannvorrichtung insbesondere der Bearbeitungsstation eingefördert wird und die Spannvorrichtung mindestens einen Halter aufweist, der mit dem Paletten- oder Werkstückrand zusammenwirkt, wonach der Halter und das Gut derart relativ zueinander bewegt, insbesondere der Halter angehoben wird, daß das Gut zumindest am Halter anliegt, hernach das Gut gespannt wird und abschließend die Schwenkhebel herausgeschwenkt werden und außer Eingriff mit dem Gut gelangen.

Der wesentliche Vorteil der Erfindung liegt insbesondere darin, daß der Randbereich des Gutes (also des Werkstückes beziehungsweise der Palette) von der Greifeinrichtung nicht benötigt wird, da die Greifeinrichtung durch Schwenkhebel nicht am Gutrand mit dem Gut zusammenwirkt. Dabei erlaubt die Erfindung auch prinzipiell, daß das Gut um eine zum Beispiel vertikale Achse gedreht wird und dann wiederum in der Spannvorrichtung abgelegt wird, wobei auch in dieser Position die Greifeinrichtung den Spannprozeß nicht behindert oder stört. Erfindungsgemäß wird vorgesehen, daß der Schwenkhebel abschließend derart herausgeschwenkt wird, daß er außer Eingriff mit der Palette beziehungsweise dem Werkstück gelangt. Auch zu diesem Zeitpunkt ist dann bereits wieder eine Bewegung zwischen Gut und Greifeinrichtung in einer Ebene möglich, da die Schwenkhebel so weit zurückgeschwenkt werden, daß diese nicht mehr stören.

Die Erfindung betrifft in diesem Zusammenhang auch ein Verfahren für das Entladen einer Bearbeitungsstation mit einem Werkstück, wobei die Schwenkhebel einer Greifeinrichtung in die von der Spannvorrichtung und der Bearbeitungsstation gespannte Palette oder das Werkstück eingreifen um diese zu halten, hernach die Spannvorrichtung gelöst wird und dann zumindest ein Halter der Spannvorrichtung derart relativ bewegt, insbesondere abgesenkt wird, daß die Greifeinrichtung das Werkstück entweder unmittelbar oder mittelbar durch die Palette trägt, und hernach die Greifeinrichtung die Palette beziehungsweise das Werkstück aus der Bearbeitungsstation fährt. Auch bei dem Entladen der Bearbeitungsstation werden die Vorteile der Erfindung deutlich, da, wie beim Entladen auch beim Beladen keine Kollision zwischen der Spannvorrichtung einerseits und der Greifeinrichtung andererseits zu befürchten ist. Besteht aber keine Kollision zwischen diesen beiden Elementen, erfolgt auch ein sehr schnelles und zuverlässiges Spannen, ohne ansonsten vielleicht notwendigen, aufwendigen Übersetzern oder Zwischenhaltern und so weiter. Diese Vorteile charakterisieren die Erfindung sowohl beim Be- wie beim Entladen einer Bearbeitungsstation.

Bevorzugt ist der Halter U-förmig ausgebildet (als liegendes U), damit ein Schenkel als Auflage dient.

Günstigerweise ist der Halter, der mit dem Gutrand (also dem Rand des Werkstückes oder der Palette) zusammenwirkt, ein Teil des Werkstückschlittens und somit die Bewegung des Halters von der Werkstückschlittenbewegung der Bearbeitungsstationen abgeleitet. Diese Bewegungsachse steht sowieso zur Verfügung, da der Werkstückschlitten für eine Positionierung des Werkstückes für Bearbeitungszwecke dient. Während der Werkstückwechselphase wird normalerweise diese Achse nicht benötigt, wird aber nun gemäß dem erfindungsgemäßen Vorschlag zusätzlich genützt, wodurch ein entsprechender Zusatzeffekt ohne Mehrkosten realisierbar ist. Günstigerweise ist dies die vertikale Y-Achse der Bearbeitungsstation. Natürlich ist alternativ vorgesehen, daß die Bewegung des Halters durch einen separaten Antrieb erfolgt. Dies kann eine lineare oder auch eine rotatorische Bewegung sein.

Alternativ ist erfindungsgemäß auch vorgesehen, daß die Relativbewegung zwischen Halter und Werkstück nicht von dem Halter abgeleitet ist, sondern die Greifeinrichtung das Werkstück auf dem Halter ablegt. Zum Beispiel weist die Greifeinrichtung eine entsprechende Linearachse auf.

Die Erfindung ist in den weiteren Ansprüchen beschrieben und in der Zeichnung gezeigt. Es zeigen:
- Fig. 1: in einer dreidimensionalen Ansicht eine erfindungsgemäße Bearbeitungsstation mit dem erfindungsgemäßen Beladesystem;
- Fig. 2: in einer Seitenansicht das erfindungsgemäße Beladesystem;
- Fig. 3 und 5: in einer Draufsicht je eine Variante der erfindungsgemäßen Greifeinrichtung;
- Fig. 4: in einer weiteren Ansicht nach Fig. 2;
- Fig. 6: ein weiteres Detail der erfindungsgemäßen Greifeinrichtung bzw. Beladesystem
- Fig. 7 und 8: je in einer Ansicht eine weitere Variante der Erfindung und
- Fig. 9a bis 9d: verschiedene Schritte eines erfindungsgemäßen Verfahrens zum Beladen einer Bearbeitungsstation.

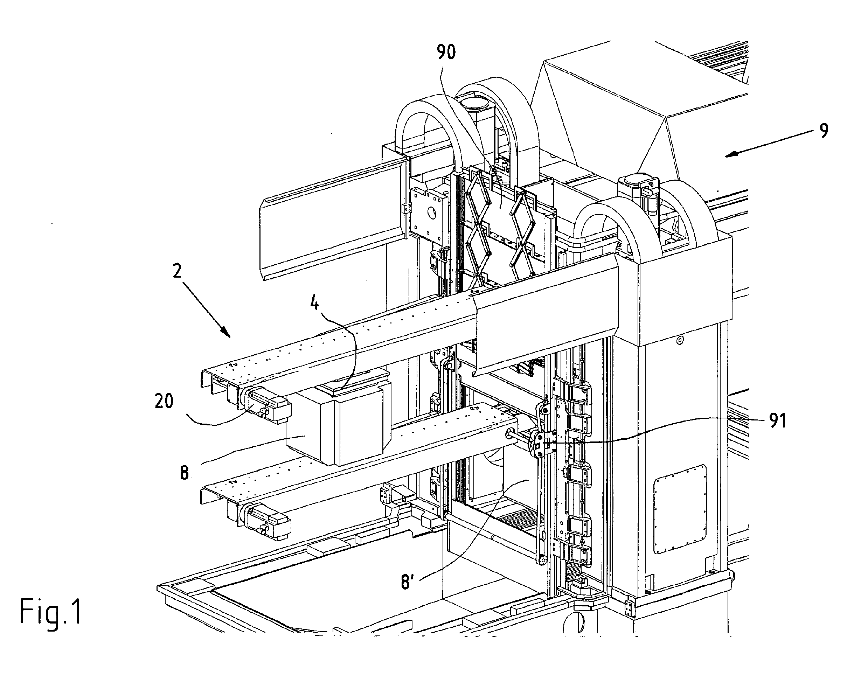

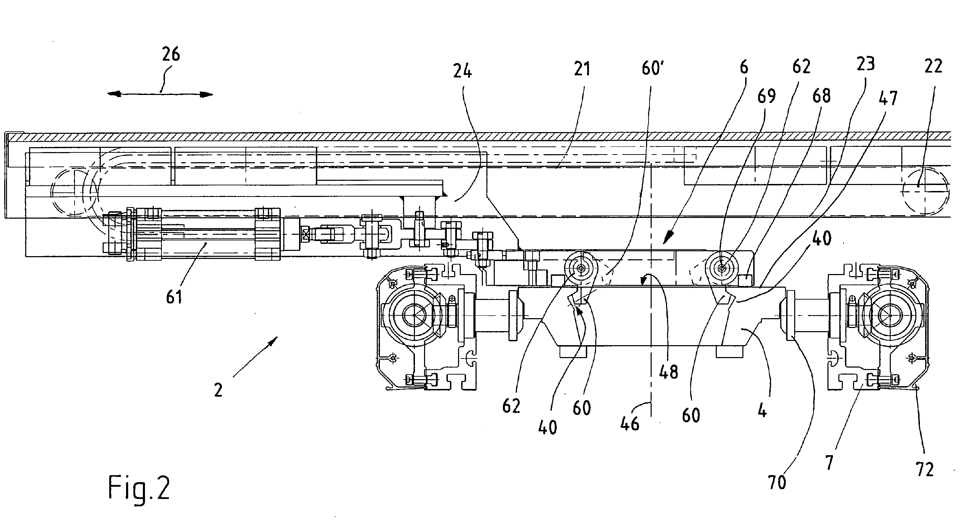

Fig. 1 zeigt eine erfindungsgemäße Beladeeinrichtung 2, insbesondere für das Be- und Entladen von Bearbeitungsstationen 9, mit auf Paletten 4 montierten Werkstücken 8, wobei die Beladeeinrichtung 2 eine Führung 21 aufweist, auf welcher ein Laufwagen 24 (siehe Fig. 2) bewegbar ist und der Laufwagen eine Greifeinrichtung 6 trägt.

Es ist von Vorteil, daß die Bearbeitungsstation 9 durch eine Tür 90 verschließbar ist, durch die die Beladeeinrichtung 2 die Palette durch die geöffnete Tür in bzw. aus der Bearbeitungsstation 9 transportierbar ist und die Öffnungs- bzw. Schließbewegung der Türe 90 letztendlich zwangsgesteuert von dem Laufwagenantrieb 20 abgeleitet ist. Für den Antrieb der Türe 90 dient ein Türantrieb 91. Es handelt sich hier um drei Rollen, von welchen die mittlere Rolle durch eine Antriebswelle angetrieben ist und zwischen denen meanderförmig ein Gurt oder Band für den Antrieb der Türe 90 oder deren Türsegmente geführt ist. Die Antriebswelle überträgt ein Drehmoment der Umlenkwalze 22, die ihrerseits von einem Zugmittel 23 von dem Laufwagenantrieb 20 angetrieben wird. Die hier gezeigte Anordnung ist insbesondere dann günstig, wenn zum Beispiel konische Werkstücke 8 eingefördert werden, die unten breiter sind wie oben. Das Tor 90 wird dabei nach oben gezogen und gibt den ersten, unteren Bereich frei, nämlich den Bereich, in welchem das konische Werkstück zuerst in die Bearbeitungsstation einfährt. Dabei ist es problemlos möglich die Übersetzung des Türantriebes 91 so anzupassen, daß dann, wenn das Werkstück eingefördert wird, das Tor seine richtige Öffnungsweite hat.

Gemäß der Erfindung wird somit vorgeschlagen, daß von dem Laufwagenantrieb beziehungsweise von der Bewegung des Laufwagens 24 die Öffnungs- beziehungsweise Schließbewegung einer die Bearbeitungsstation schließenden Türe 90 abgeleitet ist.

In Fig. 1 sind zwei übereinander angeordnete Beladeeinrichtungen 2 gezeigt. In der oberen Beladeeinrichtung befindet sich das Werkstück 8 noch außerhalb, in der unteren befindet sich das Werkstück 8' innerhalb der Bearbeitungsstation 9.

Die Beladeeinrichtung 2 besteht, wie das zum Beispiel in Fig. 2 gezeigt ist, zum einen aus der Greifeinrichtung 6, die die Palette 4 ergreift und Elementen für den Betrieb der Greifeinrichtung 6, also einen Laufwagenantrieb 20 der Führung 21 und dem Laufwagen 24.

In Fig. 2 ist angedeutet, daß die Greifeinrichtung 6 einen Arbeitszylinder als Greifantrieb 61 aufweist, der, wie weiter unten noch geschildert wird, letztendlich über Wellen 62 auf Schwenkhebel 60 wirkt, die in Greiftaschen 40 an der Palette bzw. den Palettenrand eingreifen. Gestrichelt ist in Fig. 2 die zweite Stellung der Schwenkhebel 60' angedeutet, bei welcher diese nicht in die Palette eingreifen sondern diese freigeben.

Die Anordnung ist geschickterweise dabei so gewählt, daß nur ein Greifantrieb 61 auf zwei Wellen 62 wirkt und diese gegensinnig antreibt, so daß beide Wellen ihre Schwenkhebel in gleicher Weise zum Beispiel nach außen in die Greiftaschen bewegt.

In einer bevorzugten Ausgestaltung der Erfindung ist vorgesehen, daß zwei Schwenkhebel 60 pro Welle 62 vorgesehen sind und zwei Wellen 62 angeordnet sind, wodurch eine Palette 4 durch vier Schwenkhebel 60 von der Greifeinrichtung 6 gehalten werden.

Des Weiteren ergibt Fig. 2, daß die Schwenkhebel 60 jeweils zum Plattenrand hin geschwenkt werden, es ist aber auch problemlos möglich eine andere Anordnung zu wählen, wobei dann zum Beispiel die Schwenkhebel den Rand von außen her ergreifen.

In Fig. 2 ist die Situation gezeigt, in welcher die Greifeinrichtung 6 eine Palette 4, die sich auf einem Transportband 7 befindet, innen ergreift. Der äußere Rand der Palette liegt dabei auf Antriebsrädern 70 auf und es ist günstig hierbei die Anordnung so zu wählen wie gezeigt, weil dadurch keine Kollision im Randbereich auftritt. Wird aber die Anordnung des Transportbandes anders gewählt, so ist es problemlos möglich die Schwenkhebel auch von außen am Palettenrand angreifen zu lassen.

Des Weiteren zeigt Fig. 2 mit Bezugsziffer 69 die Schwenkachsen der Schwenkhebel 60. Gestrichelt ist die zurückgestellte, erste Stellung des Schwenkhebels 60' angedeutet. In dem hier gezeigten Ausführungsbeispiel wird die Palette 4, die in diesem Zusammenhang auch als Gut 4 gekennzeichnet und beziffert ist, durch die Schwenkbewegung der Schwenkhebel 60 angehoben. Die Schwenkhebel 60 greifen dabei in Greiftaschen 40, in der der Greifeinrichtung 6 zugewandten Fläche 48 der Palette 4 ein.

In dem hier gezeigten Beispiel ist diese Fläche 48 auch gleichzeitig die Kontaktfläche 47, da diese Kontaktfläche 47 des Gutes 4 an der Greifeinrichtung 6 anliegt.

Erfindungsgemäß ist für die Greifeinrichtung insbesondere vorgesehen, daß das Gut 4 und die Greifeinrichtung 6 in einer Ebene relativ zueinander bewegbar sind. In Fig. 2 steht die Ebene senkrecht zur Blattebene beziehungsweise rechtwinklig zur Verbindungslinie 46, die hier als Symmetrieachse des Gutes eingezeichnet ist.

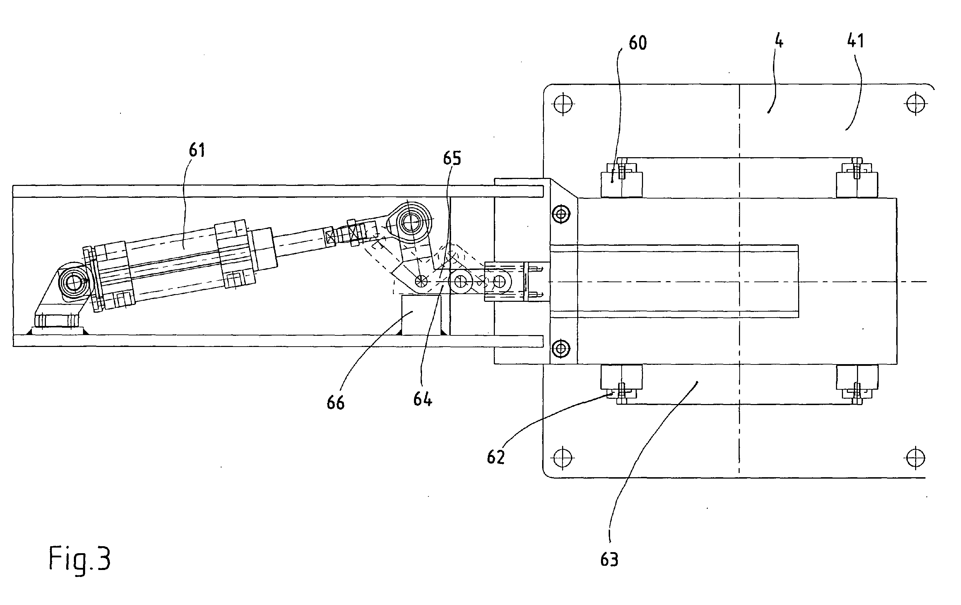

Fig. 3 zeigt in einer Draufsicht die in eine Palette 4 eingreifende Greifereinrichtung 6. Die Palette 4 ist dabei zum Beispiel rahmenartig 41 ausgestaltet, das Werkstück 8 wird durch die Palette 4 verdeckt und ist nicht zu sehen.

Für den Antrieb der Schwenkhebel 60 über die Wellen 62 dient letztendlich der Greifantrieb 61. Der Greifantrieb 61 wirkt dabei auf eine Kniehebelanordnung 64, die so ausgebildet ist, daß sich eine Selbsthemmung ergibt. Der Kniehebel wird nämlich in der, die Palette 4 ergreifenden Stellung über den Totpunkt bewegt, derart, daß der Schenkel 65, der die Haltekraft überträgt, an dem Anschlag 66 anliegt und blockiert wird. Diese geschickte Anordnung führt dazu, daß die Last des Werkstückes 8, die über die Schwenkhebel 60, die Wellen 62, den Schieber 63 letztendlich an dem Schenkel 65 anliegt, diesen nicht aufdrückt sondern zudrückt und so einen passiven, sicheren Verbund ergiebt. Somit ist auch bei einem Ausfall des Greifantriebes 61 gewährleistet, daß die Palette nicht von der Greifeinrichtung 6 freikommt. An Stelle dieser selbsthemmenden Kniehebelanordnung 64 sind natürlich auch andere, selbsthemmende Getriebe einsetzbar.

Der Schieber 63 steuert die Wellen 62 einmal über- und einmal unterhalb dieser Wellen an, um durch eine translatorische Bewegung des Schiebers gegensinnige Wellenrotationen zu erreichen und das Nachaußenschwenken der Schwenkhebel 60, wie in Fig. 2 gezeigt, zu realisieren.

Die Bewegung der Beladeeinrichtung ergibt sich aus dem Doppelpfeil 26. In diesem Fall stört die als Auflager 7 dienende Transportbahn zumindest eine Rollenbahn 72 der Transportbahn. Es ist daher vorgesehen, daß die Palette zunächst auf einer Auflage 7 aufliegt und das Zusammenwirken der Schwenkhebel 60 mit der Palette 4 die Palette 4 etwas anhebt und hernach die Auflage 7 wegbewegt wird und hernach die Greifeinrichtung versetzt wird. Hierzu ist vorgesehen, daß die Rollenbahn 72 (als Auflage 7) in einer im Wesentlichen horizontalen Ebene weggeschwenkt wird.

In einer bevorzugten Variante der Erfindung ist vorgesehen, daß das Gut 4 zunächst auf einer Auflage 7, insbesondere einer Transportbahn oder ähnlichen aufliegt und nachdem die Greifeinrichtung 6 das Gut 4 hält, die Auflage 7 und/oder die Greifeinrichtung wegbewegt wird.

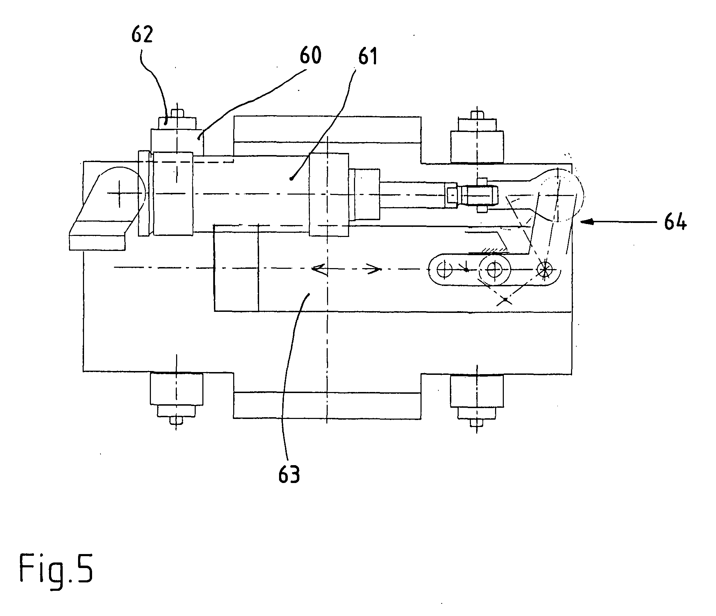

Fig. 3 zeigt eine Ausgestaltung der erfindungsgemäßen Greifeinrichtung in verhältnismäßig ausladender Bauweise, wie sie zum Beispiel für die Beladeeinrichtung 2 nach Fig. 1 von Vorteil ist, um in die Bearbeitungsstation hineinzugreifen. Bei anderen Einsatzbereichen der Erfindung ist es günstig, eine verhältnismäßig kompakt bauende Greifeinrichtung 6 zu realisieren, wie sie zum Beispiel in Fig. 5 angeordnet ist. Wiederum wird in einer Draufsicht die Greifeinrichtung 6 gezeigt, allerdings diesesmal ohne eine Palette. Die Anordnung ist so gewählt, daß diese nicht viel größer sein muß wie eine darunter hängende Palette 4.

In einer bevorzugten Variante der Erfindung wird vorgeschlagen, daß die Palette 4 an der Greifeinrichtung 6 hängt. Alternativ ist es natürlich auch möglich, daß die Greifeinrichtung unterhalb der Palette angeordnet ist, also die Palette auf dieser steht.

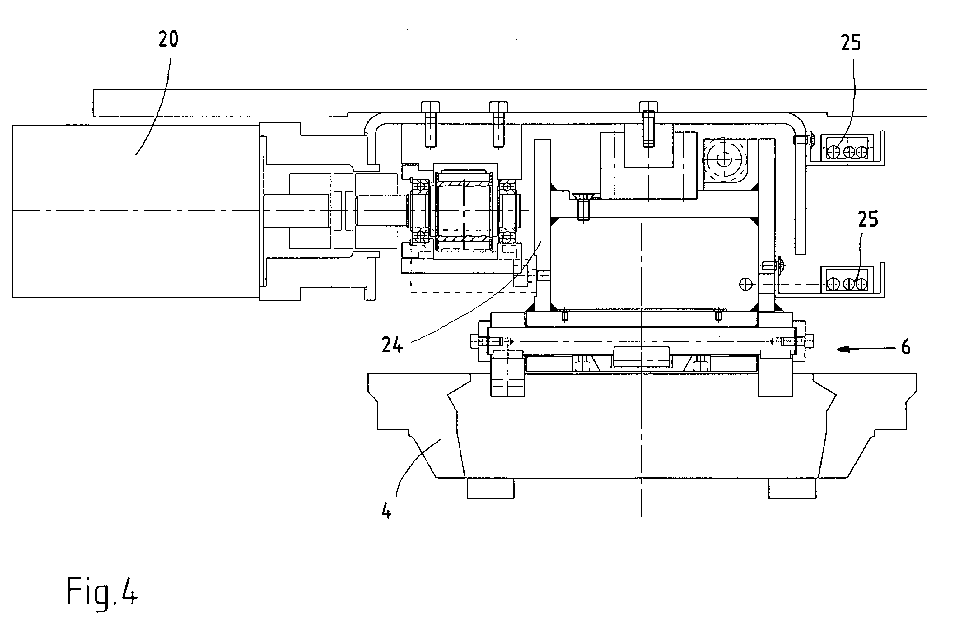

In Fig. 4 ist eine Seitenansicht der erfindungsgemäßen Greifeinrichtung 6 gezeigt. Da auf der Greifeinrichtung 6 für den Betrieb des Greifantriebes 61 Energie benötigt wird, ist in einer Rollkette eine Energieleitung 25 vorgesehen. Dies kann elektrische Energie, pneumatische oder hydraulische Energie sein.

Wie in Fig. 2 bereits geschildert ist es möglich, daß die Auflage 7 für die Bewegung der Greifeinrichtung stört. In dem hier gezeigten Ausführungsbeispiel sind die Rollenbahn 72 um horizontale Achsen 73 derart schwenkbar (siehe Doppelpfeil 74), damit diese nicht mehr als Auflager der Palette 4 dienen können. In diesem Fall ist es zum Beispiel möglich, daß die Greifeinrichtung samt Palette und Werkstück nach unten abgesenkt wird. Vom Ablauf her ist vorgesehen, daß die Palette 4 sich erst wegbewegen kann, wenn die Palette sicher an der Greifeinrichtung hängt. Gegebenenfalls ist vorher die Auflage 7 ebenfalls wegzubewegen.

Im umgekehrten Fall, das heißt, wenn die Greifeinrichtung eine Palette wieder abgibt, ist vorgesehen, daß die Greifeinrichtung 6 die Palette 4 erst freigibt, wenn mindestens ein Auflager 7 für die Palette, bevorzugt unter der Palette, positioniert ist. Es können natürlich eine Mehrzahl von Auflagern wie angedeutet, zum Beispiel die beiden Rollenbahnen 72 einer Transportbahn 7 als Auflager und dergleichen positioniert werden.

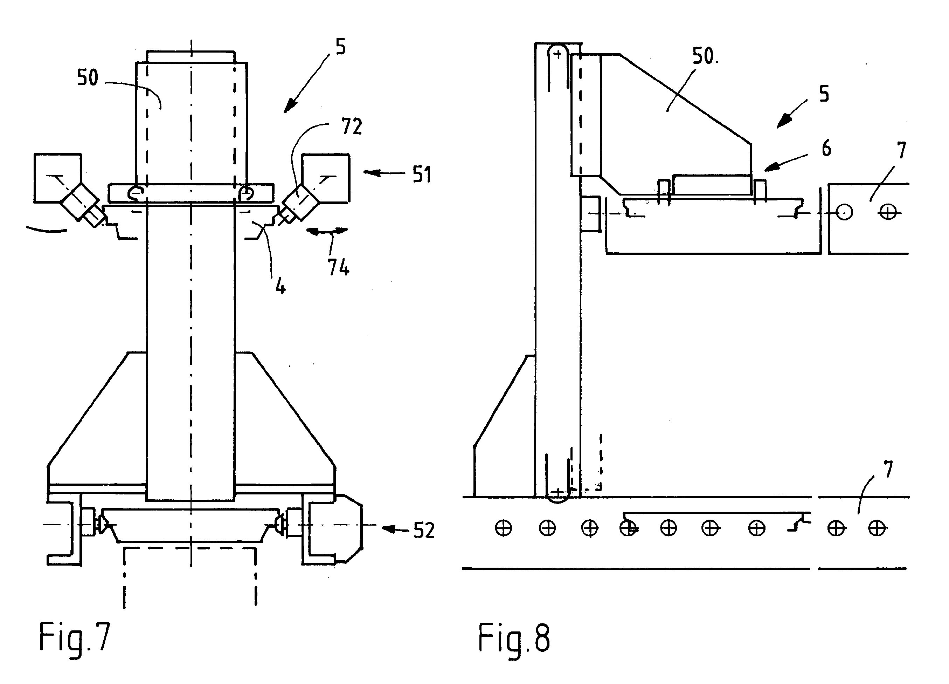

Fig. 7, Fig. 8 zeigen eine erfindungsgemäße Greifeinrichtung als Teil eines Aufzugs für das vertikale Versetzen von werkstücktragenden Paletten, die in einer ersten Ebene, zum Beispiel auf einer Transportbahn 7 angefördert werden und in einer zweiten Ebene abgefördert werden, wobei der Aufzug 5 eine zumindest die erste und zweite Ebene 51, 52 verbindende Bahn 53 aufweist, auf welchen ein Schlitten 50 verfahrbar ist, wobei der Schlitten 50 die Greifeinrichtung 6 trägt.

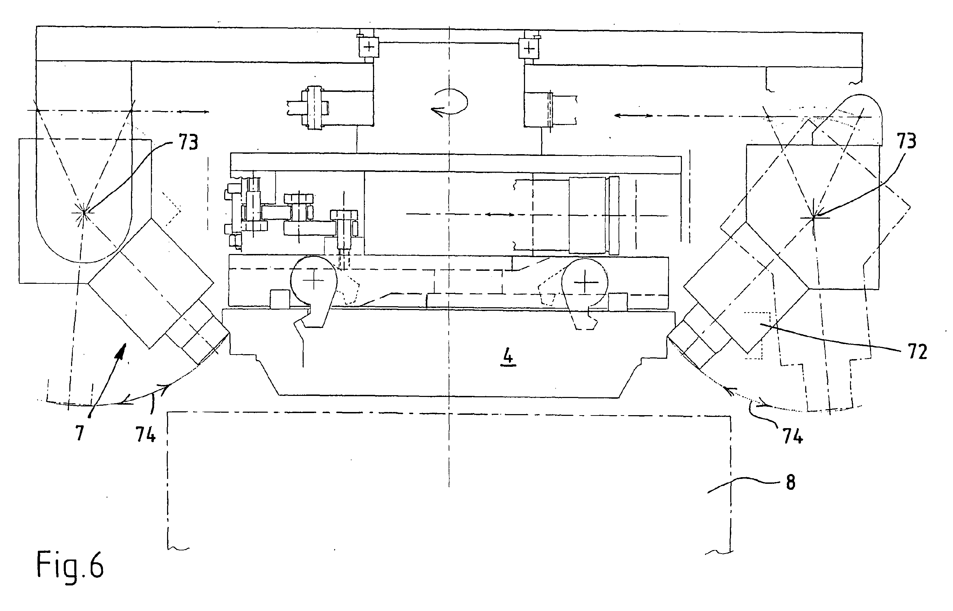

Dieses wie ein noch weiter folgendes Ausführungsbeispiel zeigt diesen weiten Einsatzbereich der erfindungsgemäßen Greifeinrichtung 6. Die Verhältnisse für das Wegschwenken der Rollenbahn 72 sind mit denen in Fig. 6 vergleichbar.

Des weiteren betrifft die Erfindung auch eine Greifeinrichtung, die Teil eines Drehtisches für das Wenden von werkstücktragenden Paletten ist, wobei der Drehtisch um eine Drehachse drehbar und der Drehtisch eine Greifeinrichtung 6 wie oben beschrieben besitzt. In einem solchen Fall kommt es günstigerweise auf eine verhältnismäßig kompakte Bauweise an, wie dies zum Beispiel in Fig. 5 ausgeführt ist. Dabei erlaubt es die Erfindung, daß der Drehtisch sowohl um eine horizontal oder vertikal orientierte Drehachse drehbar ist.

Die Erfindung umfaßt insofern auch einen Drehtisch beziehungsweise einen Aufzug, der mit einer entsprechenden, erfindungsgemäßen Greifeinrichtung ausgestattet ist.

Insbesondere in Fig. 1 bzw. 2 wird das erfindungsgemäße Beladesystem für eine Bearbeitungsstation deutlich, bei welcher in geschickter bevorzugter Weise die aufeinander abgestimmte ebenfalls erfindungsgemäße Palette 4 mit der ebenfalls erfindungsgemäßen Greifeinrichtung 6 zusammenwirkt. In diesem Zusammenhang beschränkt sich die Erfindung aber nicht nur auf das Beladesystem mit den gezeigten Ausführungsformen von Palette bzw. Greifeinrichtung, sondern ist auch weiter auslegbar. Es ist natürlich möglich, daß das Beladesystem eine Beladeeinrichtung besitzt, die nicht eine Greifeinrichtung wie vorbeschrieben aufweist, sondern in beliebiger Weise, gegebenenfalls mit jeweiligen Einzelantrieben, Schwenkhebel antreibt, die die Palette wie beschrieben halten. Der Vorteil der Schwenkhebel liegt darin, daß dadurch problemlos eine absenkende und laterale Bewegung ausgeführt werden kann, ohne zusätzliche Antriebe.

Wie zum Beispiel in Fig. 2 gezeigt, ist es günstig, daß die Beladeeinrichtung 2 eine Greifeinrichtung besitzt, die über der Palette positionierbar ist und die Schwenkhebel 60 von oben die Palette 4 ergreifen. Die Erfindung ist aber auch prinzipiell dahingehend einsetzbar, daß es auch möglich ist, die Palette mit dem Schwenkhebel von unten oder auch seitlich bzw. schräg zu ergreifen. Diesbezüglich ist das Beladesystem, die Greifeinrichtung bzw. die Erfindung überhaupt sehr flexibel.

In Fig. 6 ist gezeigt, daß zum Beispiel für eine vertikale Bewegung der Greifeinrichtung es günstig ist, wenn die gesamte Auflage 7, also beide Rollenbahnen 73, wegbewegt bzw. weggeschwenkt werden. In Fig. 2 hingegen ist es ausreichend, wenn nur ein Teil der Auflage 7, hier zum Beispiel die rechte Rollenbahn 72, in einer im wesentlichen horizontal orientierten Ebene wegbewegbar ist, insbesondere weggeschwenkt wird. Dies spart entsprechende Bewegungsachsen ein.

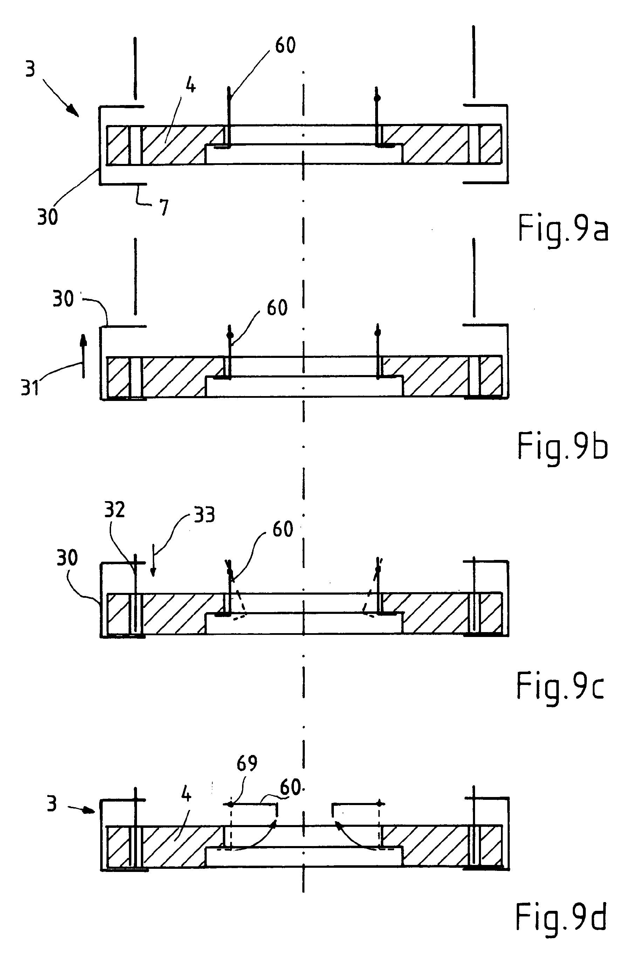

Fig. 9a - d zeigen das erfindungsgemäße Verfahren für das Beladen einer Bearbeitungsstation mit einem Werkstück, welches auf einer Palette aufmontiert ist, wobei die Palette von einer Greifeinrichtung gehalten ist, die Schwenkhebel aufweist.

In der in Fig. 9a gezeigten Position wird die Palette 4 (mit dem daranhängenden, aber nicht gezeigten Werkstück) in einer Bewegungsrichtung senkrecht zur Blattebene, zum Beispiel in eine Spannvorrichtung 3, hereinbewegt. Letztendlich wirkt die Spannvorrichtung, insbesondere die C-Halter 30, wieder als Auflage 7. Die C-artigen Halter 30 umfassen den Palettenrand. Nachdem die Palette 4 vollständig eingefahren ist, wird die Spannvorrichtung 3 und/oder der C-Halter 30 nach oben (Pfeil 31) bewegt, und der untere Schenkel des C liegt an der Palette an. Dies ist in Fig. 9b gezeigt. Nun erfolgt in geeigneter, bekannter Weise ein Spannen durch einen Spannbolzen 32, der nach unten (Pfeil 33) bewegt wird. Je nachdem wie die Spannanordnung gewählt ist, ist zum Beispiel eine Hülse in der Palette vorgesehen. Nachdem die Spannvorrichtung die Palette sicher ergriffen hat, kann der Schwenkhebel 60 zurückbewegt werden, was mit der gestrichelten Darstellung angedeutet ist. Die Palette ist am Ende (nach Fig. 9c) frei von der Greifeinrichtung 6, und es ist möglich, eine entsprechende Relativbewegung zwischen Greifeinrichtung 6 und Palette durchzuführen, zum Beispiel diese abzusenken und/oder die Greifeinrichtung 6 wieder zurückzuziehen. Dies ist in Fig. 9d gezeigt. Die Palette 4 wird durch die Spannvorrichtung sicher gehalten.

Auf diese Weise ist es möglich, eine Bearbeitungsstation zu beladen, in umgekehrter Folge ist es natürlich möglich, die Bearbeitungsstation zu entladen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Greifeinrichtung, welche zum Ergreifen von Gütern wie Werkstücken oder werkstücktragenden Paletten dient, und die Greifeinrichtung einen Greifantrieb aufweist, welcher Schwenkhebel derart betätigt, daß diese in einer ersten Stellung in Greiftaschen oder Hinterschneidungen des Gutes haltend eingreifen und diese in einer zweiten Stellung aus diesen herausgeschwenkt sind und das Gut derart freigibt, daß Gut und Greifeinrichtung in einer Ebene relativ zueinander bewegbar sind.

2. Greifeinrichtung nach Anspruch 1, **dadurch gekennzeichnet, daß** die Ebene rechtwinklig zu einer Verbindungslinie (46) zwischen dem Gut (4) und der Greifeinrichtung (6) ist und / oder die Ebene parallel zu einer Kontaktfläche (47) zwischen Gut (4) und Greifeinrichtung (6) ist und / oder die Schwenkachse (69) der Schwenkhebel parallel zur Ebene ist und / oder das Gut (4) und die Greifeinrichtung (6) kollisionsfrei zueinander bewegbar sind.

3. Greifeinrichtung nach einem oder mehreren der vorhergehenden Ansprüche, **dadurch gekennzeichnet, daß** der Abstand der Schwenkhebel (60) geringer ist als die Außenabmessung des Gutes (4) und / oder die Schwenkhebel (60) von der gleichen Seite her mit den jeweiligen Greiftaschen (40) und Hinterschneidungen des Gutes (4) zusammenwirken und / oder der Abstand der Schwenkachsen (69) der Schwenkhebel (62) geringer ist als die Außenabmessung des Gutes (4).

4. Greifeinrichtung nach einem oder mehreren der vorhergehenden Ansprüche, **dadurch gekennzeichnet, daß** die Greifeinrichtung (6) eine Anlageplatte (68) aufweist und das Gut (4) mit seiner äußeren Fläche in der ersten Stellung an der Anlageplatte (68) anliegt und / oder die Schwenkhebel (60) an Wellen (62) angeordnet sind und der Greifantrieb (61) die Wellen (62) gegensinnig antreibt, wobei bevorzugt zwei Schwenkhebel (60) pro Welle (62) angeordnet sind und zwei Wellen (62) vorgesehen sind und / oder der Greifantrieb (61) einen auf die Wellen (62) wirkenden Schieber (63) aufweist, der über ein selbsthemmendes Getriebe, insbesondere eine Kniehebelanordnung (64) durch einen Arbeitszylinder angetrieben wird und/oder die Greifeinrichtung (6) derart selbsthemmend ausgebildet ist, daß das Gut (4) auch bei einem Ausfall des Greifantriebes nicht von der Greifeinrichtung getrennt ist und / oder die Schwenkhebel (60) bezüglich des Gutes (4), zum Halten des Gutes (4), jeweils zum Gutrand hin, insbesondere von innen nach außen, geschwenkt werden.

5. Greifeinrichtung nach einem oder mehreren der vorhergehenden Ansprüche, **dadurch gekennzeichnet, daß** das Gut (4) zunächst auf einem Auflager (7), insbesondere einer Transportbahn oder ähnlichem aufliegt, und, nachdem die Greifeinrichtung (6) das Gut (4) hält, die Auflage (7) und/oder die Greifeinrichtung wegbewegt wird und / oder daß, bevor die Greifeinrichtung (6) das Gut (4) freigibt, mindestens ein Auflager (7) für das Gut (4), bevorzugt unter dem Gut (4), positioniert wird.

6. Greifeinrichtung nach einem oder mehreren der vorhergehenden Ansprüche, **dadurch gekennzeichnet, daß** die Greifeinrichtung (6) durch einen Laufwagen (24), insbesondere mit einem Laufwagenantrieb, in einer Führung (21) bewegbar ist.

7. Greifeinrichtung nach einem oder mehreren der vorhergehenden Ansprüche, **dadurch gekennzeichnet, daß** sich die Greifeinrichtung (6) mit dem aufgenommenen Gut (4) unter oder über dem Laufwagen (24) befindet und / oder das Gut (4) an der Greifeinrichtung (6) hängt oder auf der Greifeinrichtung steht und / oder als Gut (4) eine das Werkstück tragende Palette oder ein Werkstück vorgesehen ist.

8. Greifeinrichtung nach einem oder mehreren der vorhergehenden Ansprüche, **dadurch gekennzeichnet, daß** die Greifeinrichtung (6) insbesondere mit dem aufgenommenen Gut (4) über den Laufwagen vorkragt.

9. Greifeinrichtung nach einem oder mehreren der vorhergehenden Ansprüche, **dadurch gekennzeichnet, daß** die Greifeinrichtung (6) schmäler ist als das Gut/die Palette (4).

10. Greifeinrichtung nach einem oder mehreren der vorhergehenden Ansprüche, **dadurch gekennzeichnet, daß** von dem Laufwagenantrieb (20) oder der Bewegung des Laufwagens (24) die Öffnungs- und Schließbewegung einer die Bearbeitungsstation verschließenden Tür (90) abgeleitet ist.

11. Greifeinrichtung nach einem oder mehreren der vorhergehenden Ansprüche, **dadurch gekennzeichnet, daß** die Greifeinrichtung (6) Teil eines Aufzuges oder eines Drehtisches ist.

12. Gut, wie zum Beispiel eine ein Werkstück tragende Palette oder ein Werkstück, insbesondere für das Zusammenwirken mit einer Greifeinrichtung nach einem oder mehreren der vorhergehenden Ansprüche, wobei das Gut zumindest Greiftaschen oder Hinterschneidungen aufweist, die mit den Schwenkhebeln der Greifeinrichtung zusammenwirken, **dadurch gekennzeichnet, daß** sich die Greiftaschen/Hinterschneidungen (40) an einer Seite des Gutes (4) befinden.

13. Gut nach Anspruch 12, **dadurch gekennzeichnet, daß** sich die Greiftasche/ Hinterschneidung (40) an der der Greifeinrichtung (6) zugewandten Gutseite befindet und / oder die Greiftaschen (40) beziehungsweise Hinterschneidungen auf der dem Werkstück (8) abgewandten Palettenseite (4) angeordnet beziehungsweise zugänglich sind und / oder die Greiftaschen (40) beziehungsweise Hinterschneidungen durch Aussparungen des Gutes gebildet sind.

14. Gut nach einem oder beiden der vorhergehenden Ansprüche 12 und 13, **dadurch gekennzeichnet, daß** das Gut (4) als Palette ausgebildet ist, wobei auf der Palette das Werkstück montierbar ist und / oder das Gut, insbesondere die Palette (4), zargenartig oder rahmenartig (41) ausgebildet ist und der innenliegende Rand der Zarge beziehungsweise des Rahmens (41) zumindest abschnittsweise die Hinterschneidung beziehungsweise Greiftasche (40) bildet.

15. Gut nach einem oder mehreren der vorhergehenden Ansprüche 12 bis 14, **dadurch gekennzeichnet, daß** die mit dem Schwenkhebel (60) zusammenwirkenden Flächen der Hinterschneidungen/Greiftaschen (40) des Gutes beziehungsweise der Palette (40) parallel oder spitzwinklig zu einer äußeren, insbesondere der Greifeinrichtung (6) zugewandten Fläche sind.

16. Beladesystem für eine Bearbeitungsstation, welche Werkstücke bearbeitet, wobei das Beladesystem eine Greifeinrichtung, insbesondere nach einem oder mehreren der vorhergehenden Ansprüche 1 bis 11, aufweist, die mit einem Gut, insbesondere nach einem oder mehreren der vorhergehenden Ansprüche 12 bis 15, einem Werkstück unmittelbar oder einer das Werkstück tragenden Palette zusammenwirkt, **dadurch gekennzeichnet, daß** die Greifeinrichtung (6) derart bezüglich der Palette/des Gutes (4) positionierbar ist, daß die Schwenkhebel (60) der Greifeinrichtung in Hinterschneidungen/Greiftaschen (40) in der der Greifeinrichtung (6) zugewandten Fläche (48) der Palette/des Gutes (4) einzugreifen vermögen.

17. Beladesystem nach Anspruch 16, **dadurch gekennzeichnet, daß** die Schwenkhebel (60) von oben das Gut beziehungsweise die Palette (4) ergreifen und / oder das Gut an der Greifeinrichtung hängt.

18. Beladesystem nach einem oder mehreren der vorhergehenden Ansprüche 16 und 17, **dadurch gekennzeichnet, daß** das Gut (4) zunächst auf einer Auflage (7), insbesondere einer Transportbahn aufliegt, und das Zusammenwirken der Schwenkhebel (60) mit dem Gut (4), insbesondere an dem schrägen Rand des Gutes (4), das Gut (4) etwas anhebt und hernach die Auflage und/oder die Greifeinrichtung wegbewegt wird.

19. Beladesystem nach einem oder mehreren der vorhergehenden Ansprüche 16 bis 18, **dadurch gekennzeichnet, daß** die Auflage (7) beziehungsweise die Transportbahn in einer horizontalen Ebene wegbewegbar ist und / oder zumindest ein Teil der Auflage (7), zum Beispiel eine Rollenbahn (72) der Transportbahn, in einer im Wesentlichen horizontal orientierten Ebene wegbewegbar, insbesondere wegschwenkbar ist.

20. Verfahren für das Beladen einer Bearbeitungsstation mit einem Werkstück, wobei das Werkstück unter der unmittelbar oder mittelbar durch eine Palette von einer Greifeinrichtung, insbesondere nach einem oder mehreren der vorhergehenden Ansprüche 1 bis 11, gehalten ist, wobei die Greifeinrichtung Schwenkhebel aufweist, die die Palette/das Werkstück halten und das Werkstück/die Palette durch die Greifeinrichtung in eine Spannvorrichtung, insbesondere der Bearbeitungsstation eingefördert wird und die Spannvorrichtung mindestens einen Halter aufweist, der mit dem Paletten- oder Werkstückrand zusammenwirkt, hernach der Halter und die Palette beziehungsweise das Werkstück derart relativ zueinander bewegt, insbesondere angehoben wird, daß die Palette/das Werkstück zumindest am Halter anliegt, hernach die Palette/das Werkstück gespannt wird und abschließend die Schwenkhebel herausgeschwenkt werden und außer Eingriff mit der Palette/dem Werkstück gelangen.

21. Verfahren für das Entladen einer Bearbeitungsstation mit einem Werkstück, wobei die Schwenkhebel einer Greifeinrichtung, insbesondere nach einem oder mehreren der vorhergehenden Ansprüche 1 bis 11, in die von der Spannvorrichtung der Bearbeitungsstation gespannte Palette oder das Werkstück eingreifen, um diese zu halten, hernach die Spannvorrichtung gelöst wird und dann zumindest ein Halter der Spannvorrichtung, derart relativ bewegt, insbesondere abgesenkt wird, daß die Greifeinrichtung das Werkstück entweder unmittelbar oder mittelbar durch eine Palette trägt und hernach die Greifeinrichtung die Palette/das Werkstück aus der Bearbeitungsstation fährt.

22. Verfahren nach den vorhergehenden Ansprüchen 20 oder 21, **dadurch gekennzeichnet, daß** die Bewegung des Halters von der Werkstückschlittenbewegung der Bearbeitungsstation abgeleitet ist und / oder die Greifeinrichtung das Werkstück auf dem Halter ablegt oder aufnimmt.

23. Bearbeitungsstation mit einem Beladesystem nach einem oder mehreren der vorhergehenden Ansprüche 16 bis 19.
